# EUROPÄISCHE PATENTSCHRIFT

(11) **EP 1 916 170 B1**
(45) Veröffentlichungstag und Bekanntmachung des Hinweises auf die Patenterteilung: **24.03.2010**
(21) Anmeldenummer: 07115680.6
(22) Anmeldetag: 05.09.2007
(51) Int. Cl.: B60W 30/18, B60W 10/06, B60W 10/02

(54) **Anfahrunterstützung**
Starting aid
Soutien au démarrage

(30) Priorität: 23.10.2006 DE 102006049880
(43) Veröffentlichungstag der Anmeldung: 30.04.2008
(73) Patentinhaber: ROBERT BOSCH GMBH, 70442 Stuttgart (DE)
(72) Erfinder: Hoetzer, Dieter, Farmington Hills, MI 48331 (US); Sarrazin, Roland, 70195 Stuttgart-Botnang (DE)

(56) Entgegenhaltungen:
- EP-A- 1 327 566
- EP-A- 1 616 770
- WO-A-81/00696
- DE-A1- 3 820 319
- DE-A1- 4 118 375
- DE-A1- 10 337 341
- GB-A- 2 325 059

## Beschreibung

### Stand der Technik

Kraftfahrzeuge existieren mit unterschiedlichen Getriebekonzepten. Insbesondere sind automatische Getriebe bekannt, also solche, bei denen Fahrstufen durch eine elektronisch oder hydraulisch gesteuerte Automatik gewählt werden, sowie handgeschaltete Fahrzeuge, bei denen zum Wählen der Fahrstufe (genauer: Eines Unter- oder Übersetzungsverhältnisses von Motordrehzahl zur Raddrehzahl) der Fahrer einen Gang auswählt, und das Getriebe mechanisch durch Betätigung eines Kupplungspedals ausund einkuppelt. Gerade bei handgeschalteten mechanischen Getrieben ist eine Anfahrhilfe wünschenswert, insbesondere dann, wenn der Fahrer mit dem Fahrzeug am Berg an starker Steigung anfahren muss. Zur Bewältigung derartiger Situationen ist es bekannt, bei angezogener Handbremse die Kupplung zu betätigen, einen geeigneten Gang einzulegen, die Kupplung langsam in Eingriff gehen zu lassen, hierbei Gas zu geben und die Handbremse zu lösen. Der Fahrer muss demzufolge den richtigen Ausgleich zwischen Momentaufbringung (durch Gasgeben) und Kupplungseingriff sowie den richtigen Zeitpunkt zum Lösen der Handbremse wählen. Weiter ist bekannt, die Kupplung bei getretenem Bremspedal langsam in Eingriff kommen zu lassen, wobei ein geeigneter Gang eingelegt ist, und am Kupplungspunkt den Fuß vom Brems- zum Gaspedal zu wechseln, um eine ausreichende Motormomentanforderung zu erreichen.

Der nächstliegende Stand der Technik nach der Präambel des Anspruch 1 wird in der GB 2 325 059 beschrieben.

### Offenbarung der Erfindung

Aufgabe der Erfindung ist es, eine Anfahrunterstützung auch für handgeschaltete Fahrzeuge bereitzustellen, die den Fahrer möglichst weitgehend entlastet.

Hierzu wird ein Verfahren zur Steuerung eines Antriebs eines Kraftfahrzeugs mit einer Handschaltung, vorgeschlagen, das die folgenden Schritte aufweist:
a) Ermitteln ob eine Anfahrsituation vorliegt,
b) Motormomentanforderung zulassen, wenn eine Anfahrsituation ermittelt ist,
c) Motormomentanforderung nicht zulassen, wenn ein Bremspedal betätigt ist und keine Anfahrsituation ermittelt ist,
d) Motormomentanforderung zulassen, wenn das Bremspedal nicht betätigt ist und keine Anfahrsituation ermittelt ist.

Es wird folglich geprüft, ob bei Motormomentanforderung eine Anfahrsituation vorliegt. Im Wesentlichen lassen sich Anfahrsituationen in solche Zustände des Kraftfahrzeugs einteilen, in denen das Fahrzeug steht und aus dem Stand heraus in Bewegung gesetzt werden soll, sowie in solche, in denen das Fahrzeug bereits leicht rückwärts rollt und in Vorwärtsbewegung versetzt werden soll oder umgekehrt. Wird eine Anfahrsituation ermittelt, wird die Motormomentanforderung zugelassen. Eine Motormomentanforderung wird aber nicht zugelassen, wenn ein Bremspedal betätigt wird und keine Anfahrsituation ermittelt ist. In diesem Fall ist davon auszugehen, dass das Fahrzeug steht und (beispielsweise) die Betätigung des Gaspedals unabsichtlich erfolgte. Eine Motormomentanforderung wird aber zugelassen, wenn das Bremspedal nicht betätigt ist und auch keine Anfahrsituation ermittelt wird. Dies ist gewissermaßen der Normalfahrzustand, also ein solcher, in dem das Fahrzeug rollt und Motormoment angefordert wird, um beispielsweise zu beschleunigen. Die Momentanforderung kann hierbei sowohl vom Fahrer selbst veranlasst worden sein (beispielsweise durch Betätigung des Gas-/Fahrpedals) oder aber von dem Motorsteuergerät selbst stammen. Letzteres kann insbesondere dann der Fall sein, wenn das Fahrzeug bereits über eine Vorrichtung zur Anfahrunterstützung verfügt, oder aus anderen Gründen heraus, in denen das Motorsteuergerät Motormoment anfordert.

In einer bevorzugten Ausführungsform der Erfindung wird zum Ermitteln der Anfahrsituation geprüft, ob die Kupplung weder vollständig geöffnet noch vollständig geschlossen ist und/oder es wird auf Vorliegen einer Geschwindigkeit des Kraftfahrzeugs von null oder etwa null geprüft. Anfahrsituationen sind bei handgeschalteten Fahrzeugen dadurch gekennzeichnet, dass sich die Kupplung weder im vollständig geöffneten Zustand (dem Leerlauf) noch im vollständig geschlossenen Zustand (der direkten Kraftkupplung) befindet. Gleichzeitig ist eine Anfahrsituation dadurch gekennzeichnet, dass die Geschwindigkeit des Kraftfahrzeugs null oder etwa null ist. Die Geschwindigkeit ist dann null, wenn sich das Fahrzeug in Ruhelage befindet. Rollt das Fahrzeug aber aufgrund gelöster Kupplung leicht vor oder zurück, ist die Geschwindigkeit zwar nicht null, aber noch etwa null. Die Richtung der Bewegung (vorwärts oder rückwärts) ist hierbei unerheblich, es kommt lediglich auf den Betrag der Geschwindigkeit an.

In einer weiter bevorzugten Ausführungsform der Erfindung wird der Zustand der Kupplung über ein Verhältnis der Raddrehzahl zur Motordrehzahl ermittelt. Das Verhältnis der Raddrehzahl zur Motordrehzahl ist in geschalteten Getrieben fest. Für jeden Gang liegt ein bestimmtes Unter-/Übersetzungsverhältnis vor. Wird genau dieses Verhältnis nicht ermittelt, sondern ein abweichendes, ist keine starre Kupplung im Antriebsstrang erfolgt, die Kupplung folglich nicht geschlossen. Ist die Raddrehzahl wesentlich niedriger als die Motordrehzahl, befindet sich das Fahrzeug in einem Zustand nahe der Ruhelage oder mit in weitaus niedriger Geschwindigkeit, als dies einer Normalfahrt entspräche. Ist die Raddrehzahl höher als dies dem Verhältnis zur Motordrehzahl im Normalfahrtzustand entspricht, ist das Fahrzeug ausgekuppelt und der Motor beispielsweise im Leerlauf.

Die Erfindung betrifft ferner eine Vorrichtung zur Betriebsführung eines Antriebs eines Kraftfahrzeugs mit einem Steuergerät, wobei die Vorrichtung ein Verfahren nach einem oder mehreren der vorhergehenden Ansprüche anwendet. Vorausgesetzt wird demzufolge ein Steuergerät, wie es heute üblich ist, wobei eines der vorstehend beschriebenen Verfahren implementiert wird. Die Implementierung kann durch geeignete Programmierung im Steuergerät selbst erfolgen, oder durch Verwendung zusätzlicher Komponenten, insbesondere zusätzlicher elektronischer Bausteine. Insbesondere bei Verwendung zusätzlicher Komponenten kann das Verfahren auch in bestehenden Kraftfahrzeugen implementiert werden.

### Kurze Beschreibung der Zeichnungen

Die Erfindung wird nachstehend anhand einer Figur und eines Ablaufdiagramms näher erläutert. Es zeigen
- Figur 1: eine schematische Darstellung eines Kraftfahrzeugs und
- Figur 2: ein Ablaufdiagramm des Verfahrens.

### Ausführungsform(en) der Erfindung

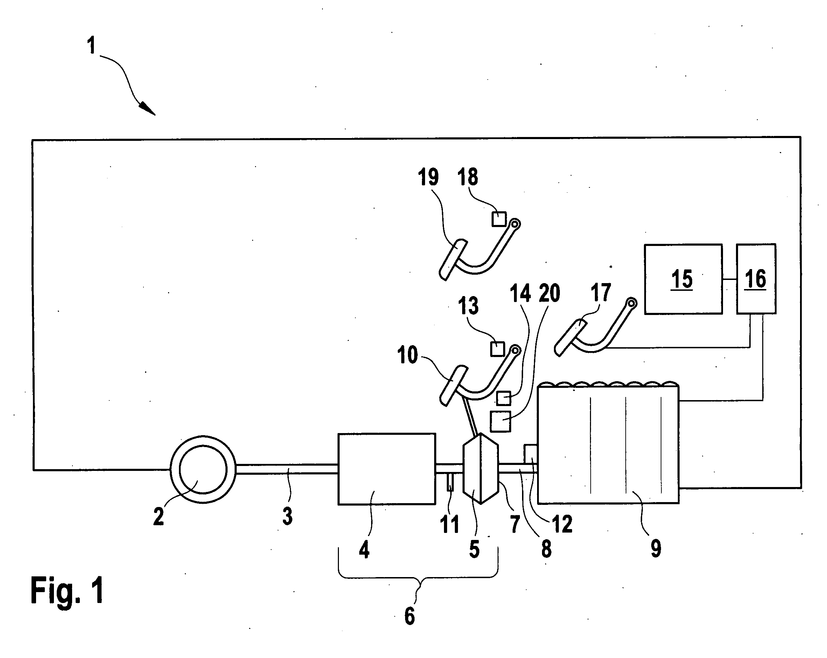

Figur 1 zeigt in schematischer Darstellung ein Kraftfahrzeug 1 mit mindestens einer Antriebsachse 2, die über einen Antriebsstrang 3, der ein handgeschaltetes Getriebe 4 sowie eine Kupplung 5 aufweist, wobei Getriebe 4 und Kupplung 5 die Elemente einer Handschaltung 6 bilden, momentbeaufschlagt wird. Die Kupplung 5 ist an ihre Eingangsseite 7 drehfest mit einer Kurbelwelle 8 einer Brennkraftmaschine 9 verbunden. Der Kupplung 5 ist zur Betätigung durch einen nicht dargestellten Fahrer des Kraftfahrzeugs 1 ein Kupplungspedal 10 angeschlossen. Dem Antriebsstrang 3 ist in beliebiger, geeigneter Weise ein Geschwindigkeitsaufnehmer (Tachogeber) 11 zur Ermittlung der Raddrehzahl beziehungsweise Geschwindigkeit angeschlossen. Der Kurbelwelle 8 ist in geeigneter Weise ein Motordrehzahlgeber 12 zur Ermittlung der Motordrehzahl angeschlossen. Das Kupplungspedal 10 weist einen oberen Endpositionsschalter 13 auf, der bei geschlossener Kupplung 5 betätigt wird, also dann, wenn das Kupplungspedal 10 nicht getreten wird, sowie einen unteren Endpositionsschalter 14, der betätigt wird, wenn die Kupplung 5 vollständig geöffnet ist, also das Kupplungspedal 10 vollständig durchgetreten ist. Statt eines oberen Endpositionsschalters 13 in Verbindung mit einem unteren Endpositionsschalter 14 kann hinsichtlich des Kupplungspedals 10 respektive der Kupplung 5 auf ein Kupplungsweggeber 20 eingesetzt werden, der über den aktuellen Öffnung- und/oder Schließungszustand der Kupplung 5 Auskunft gibt. Der Geschwindigkeitsaufnehmer 11, der Motordrehzahlgeber 12, sowie der obere Endpositionsschalter 13 und der untere Endpositionsschalter 14 beziehungsweise der Kupplungsweggeber 20 sind über nicht dargestellte Verbindungen einem Rechner 15 angeschlossen. Der Rechner 15 ist einem Motorsteuergerät 16, wie es im Stand der Technik üblich ist, zugeordnet oder angeschlossen. Dem Motorsteuergerät 16 angeschlossen ist ein Gaspedal/Fahrpedal 17, wodurch der Fahrer des Kraftfahrzeugs über das Motorsteuergerät 16 Motormoment anfordern kann, beispielsweise um das Kraftfahrzeug zu beschleunigen. Die Steuerung der Brennkraftmaschine 9 erfolgt über das Motorsteuergerät 16, wozu dieses der Brennkraftmaschine 9 angeschlossen ist. Dem Rechner 15 ist ferner ein Bremspedalschalter 18 eines Bremspedals 19 angeschlossen, wobei hier auf im Stand der Technik bereits vorhandene Schalter, beispielsweise Bremslichtschalter, zurückgegriffen werden kann. Der Bremspedalschalter 18 wird betätigt, sobald sich das Bremspedal aus seiner Ruhelage bewegt, also zumindest leicht getreten wird.

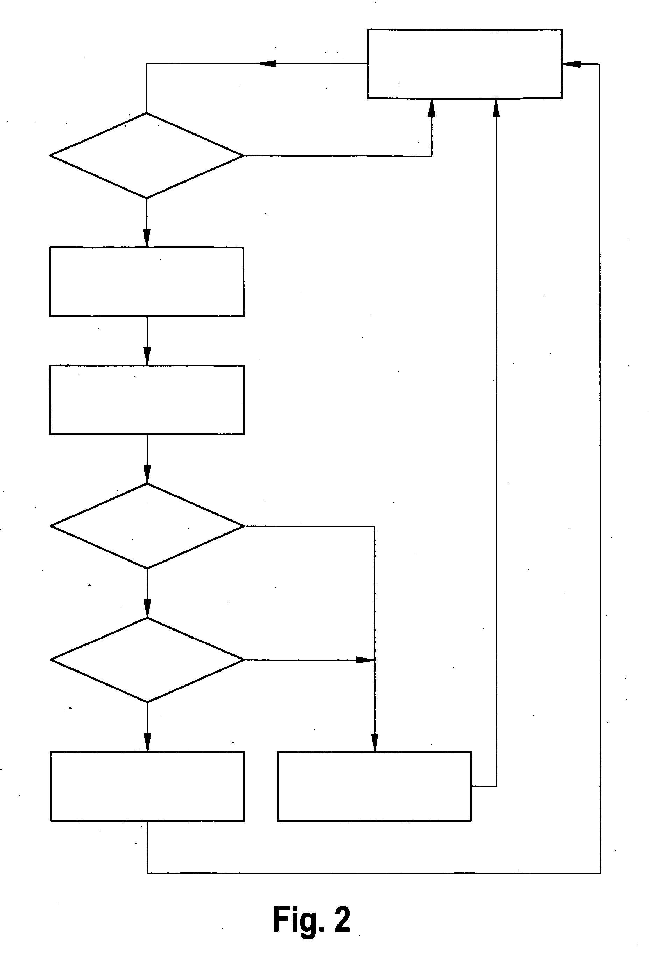

Figur 2 zeigt ein Ablaufdiagramm der Ausführung des Verfahrens.

Durch den Rechner 15 (alle nicht in Figur 2 ersichtlichen Bezugszeichen beziehen sich auf Figur 1, die zur Verdeutlichung herangezogen wird) wird fortlaufend eine dauernde Zustandsprüfung vorgenommen, die auf Vorliegen einer Momentanforderung prüft, wie sie beispielsweise durch Treten des Gaspedals/Fahrpedals 17 durch den Fahrer des Kraftfahrzeugs 1 oder durch eine eigenständige Anforderung durch das Motorsteuergerät 16 erfolgt. Wird eine Momentanforderung erkannt, wird auf Vorliegen einer Anfahrsituation geprüft. Wird eine Anfahrsituation erkannt, wird die Momentanforderung zugelassen, gleichgültig, ob das Bremspedal 19 betätigt ist oder nicht. Wird eine Anfahrsituation nicht erkannt, wird geprüft, ob das Bremspedal 19 betätigt ist (also beispielsweise der Bremspedalschalter 18 das entsprechende Signal an den Rechner 15 gibt). Ist das Bremspedal nicht betätigt, wird die Momentanforderung zugelassen, da von einem Zustand im Normalfahrbetrieb ausgegangen wird, wo der Fahrer das Kraftfahrzeug 1 beispielsweise zu beschleunigen wünscht. Ist das Bremspedal 19 betätigt, wird die Momentanforderung nicht zugelassen, da eine Momentanforderung bei getretenem Bremspedal ohne Vorliegen einer Anfahrsituation entweder irrtümlich oder missbräuchlich erfolgt ist und aus Sicherheitsgründen nicht erfolgen soll.

Bei getretenem Bremspedal 19 wird die Momentanforderung also nur zugelassen, wenn eine Anfahrsituation ermittelt wird.

Die Anfahrsituation kann anhand folgender Kriterien zuverlässig ermittelt werden:
- Die Kupplung 5 ist weder vollständig geschlossen noch vollständig geöffnet; hierzu werden die von dem oberen Endpositionsschalter 13 und vom unteren Endpositionsschalter 14 beziehungsweise vom Kupplungsweggeber 20 ermittelten Werte eingesetzt. Sowohl der obere Endpositionsschalter 13 als auch der untere Endpositionsschalter 14 dürfen nicht betätigt sein, da, wenn einer dieser Schalter betätigt ist, die Kupplung entweder vollständig geschlossen ist (oberer Endpositionsschalter 13) oder vollständig geöffnet (unterer Endpositionsschalter 14). Im ersten Fall ist der Antriebsstrang 3 starr kraftschlüssig an die Brennkraftmaschine gekoppelt. Im letzteren Fall ist die Kupplung vollständig geöffnet, die Brennkraftmaschine befindet sich folglich im Leerlauf. Alternativ zu dem oberen Endpositionsschalter 13 und dem unteren Endpositionsschalter 14 können selbstverständlich Schalter nicht im Bereich des Kupplungspedals 10, sondern im Bereich der Kupplung 5 angeordnet werden, wobei letztlich nur maßgeblich ist, dass zuverlässig der vollständig geöffnete oder vollständig geschlossene Zustand der Kupplung erkannt wird. Anstelle von einer über Schalter erfolgenden Erkennung des Kupplungszustandes kann eine solche über den Kupplungsweggeber 20 treten, wobei der tatsächliche Stand der Kupplung innerhalb ihres Weges zwischen vollständig geschlossen und vollständig geöffnet ermittelt und dem Rechner 15 übermittelt wird. Hierbei ist es möglich, die Anfahrhilfe nur bis zu einer bestimmten Schließung der Kupplung greifen zu lassen.
- Über die Geschwindigkeit des Fahrzeugs, wofür die Werte des Geschwindigkeitsaufnehmers 11 herangezogen werden, der Aussagen über die Bewegungsgeschwindigkeit des Kraftfahrzeugs 1 erlaubt.
- Über die gemessene Triebstrangverstärkung, also das Verhältnis Raddrehzahl zur Motordrehzahl, wobei anhand der Werte des Geschwindigkeitsaufnehmers 11 und des Motordrehzahlgebers 12 ein Schleifen der Kupplung 5 bei niedriger Geschwindigkeit des Kraftfahrzeugs 1 erkannt wird. Das Kraftfahrzeug 1 hat über sein Getriebe 4 ein festes Verhältnis der Motordrehzahl, also der Drehzahl der Kurbelwelle 8 der Brennkraftmaschine 9, relativ zur Drehzahl der Räder der Antriebsachse 2, letztlich zur Geschwindigkeit des Kraftfahrzeugs 1. Das Verhältnis der Motordrehzahl zur Raddrehzahl ist hierbei abhängig von dem Über-/Untersetzungsverhältnis, das durch den jeweils eingelegten Gang des Getriebes 4 vorgegeben wird. Wird dieses als 1 betrachtet, ist eine starre kraftschlüssige Kupplung zwischen Brennkraftmaschine 1 und Antriebsachse 2 erfolgt. Eine Abweichung von 1 bedeutet, dass das Fahrzeug angetrieben wird, jedoch die Kupplung das Moment nicht vollständig überträgt, also schleift. In diesem Fall liegt ebenfalls eine Anfahrsituation vor.

## Patentansprüche

1. Verfahren zur Steuerung eines Antriebs eines Kraftfahrzeugs mit einer Handschaltung, einer mechanisch durch einen Fahrer des Kraftfahrzeugs zu betätigenden Kupplung und einem Motorsteuergerät zur Steuerung einer Brennkraftmaschine, wobei das Motorsteuergerät dazu vorgesehen ist, eine Anforderung von Motormoment an die Brennkraftmaschine zuzulassen oder nicht zuzulassen, **gekennzeichnet durch** die folgenden Schritte:
- Ermitteln, ob eine Anfahrsituation vorliegt,
- Motormomentanforderung - auch bei betätigtem Bremspedal (19) - zulassen, wenn eine Anfahrsituation ermittelt ist,
- Motormomentanforderung nicht zulassen, wenn ein Bremspedal (19) betätigt ist und keine Anfahrsituation ermittelt ist,
- Motormomentanforderung zulassen, wenn das Bremspedal (19) nicht betätigt ist und keine Anfahrsituation ermittelt ist.

2. Verfahren nach Anspruch 1, **dadurch gekennzeichnet, dass** zum Ermitteln der Anfahrsituation geprüft wird, ob
- die Kupplung (5) weder vollständig geöffnet noch vollständig geschlossen ist und/oder
- es wird eine Geschwindigkeit des Kraftfahrzeugs (1) von null oder etwa null ermittelt.

3. Verfahren nach einem der vorhergehenden Ansprüche, **dadurch gekennzeichnet, dass** der Zustand der Kupplung (5) über ein Verhältnis der Raddrehzahl zur Motordrehzahl ermittelt wird.

4. Vorrichtung zur Betriebsführung eines Antriebs eines Kraftfahrzeugs mit einem Steuergerät, wobei die Vorrichtung ein Verfahren nach einem oder mehreren der vorhergehenden Ansprüche anwendet.

## Claims

1. Method for controlling a drive of a motor vehicle having a manual shift, a clutch which can be activated mechanically by a driver of the motor vehicle, and an engine control device for controlling an internal combustion engine, wherein the engine control device is provided for permitting or not permitting a request for engine torque to the internal combustion engine,
**characterized by**
the following steps:
- determining whether a starting situation is present,
- permitting an engine torque request - even when the brake pedal (19) is activated, if a starting situation is determined,
- not permitting an engine torque request if a brake pedal (19) is activated and a starting situation is not determined, and
- permitting an engine torque request if the brake pedal (19) is not activated and a starting situation is not determined.

2. Method according to Claim 1, **characterized in that** in order to determine the starting situation it is checked whether
- the clutch (5) is neither completely opened nor completely closed and/or
- a speed of the motor vehicle (1) of zero or approximately zero is determined.

3. Method according to one of the preceding claims, **characterized in that** the state of the clutch (5) is determined by means of a ratio of the wheel speed to the engine speed.

4. Device for operational control of a drive of a motor vehicle with a control device, wherein the device applies a method according to one or more of the preceding claims.

## Revendications

1. Procédé de commande d'un entraînement d'un véhicule automobile comprenant une boîte de vitesses manuelle, un embrayage pouvant être actionné mécaniquement par un conducteur du véhicule automobile, et un appareil de commande du moteur pour commander un moteur à combustion interne, dans lequel l'appareil de commande du moteur est prévu pour autoriser ou non une demande de couple moteur au moteur à combustion interne,
**caractérisé par** les étapes suivantes :
- détecter s'il existe une situation de démarrage,
- autoriser une demande de couple moteur - même si la pédale de frein (19) est actionnée - lorsqu'une situation de démarrage est détectée,
- ne pas autoriser une demande de couple moteur si une pédale de frein (19) est actionnée et qu'aucune situation de démarrage n'est détectée,
- autoriser une demande de couple moteur si la pédale de frein (19) n'est pas actionnée et qu'aucune situation de démarrage n'est détectée.

2. Procédé selon la revendication 1, **caractérisé en ce que** pour détecter la situation de démarrage, on vérifie si :
- l'embrayage (5) n'est ni complètement ouvert ni complètement fermé et/ou
- l'on détecte une vitesse du véhicule automobile (1) nulle ou presque nulle.

3. Procédé selon l'une quelconque des revendications précédentes, **caractérisé en ce que** l'état de l'embrayage (5) est détecté par le biais d'un rapport de la vitesse de rotation des roues sur la vitesse de rotation du moteur.

4. Dispositif pour mettre en oeuvre un entraînement d'un véhicule automobile comprenant un appareil de commande, le dispositif utilisant un procédé selon l'une quelconque ou plusieurs des revendications précédentes.
